# EUROPÄISCHE PATENTANMELDUNG

(11) **EP 2 826 956 A1**
(43) Veröffentlichungstag der Anmeldung: **21.01.2015**
(21) Anmeldenummer: 13176855.8
(22) Anmeldetag: 17.07.2013
(51) Int. Cl.: F01D 5/06, F01D 5/08, F04D 29/32, F04D 29/58

(54) **Rotor für eine thermische Strömungsmaschine**

(71) Anmelder: Siemens Aktiengesellschaft, 80333 München (DE)
(72) Erfinder: Costamagna, Karin, 45473 Mülheim a.d.Ruhr (DE); Kolk, Karsten, 45479 Mülheim a.d. Ruhr (DE); Stock, Sebastian, 45479 Mülheim (DE); Veitsman, Vyacheslav, 45879 Gelsenkirchen (DE)

(57) **Zusammenfassung**

Die Erfindung betrifft einen Rotor (10) für eine thermische Strömungsmaschine, insbesondere eine Gasturbine, der ausgestaltet ist, in seinem Inneren ein Medium zu führen. Um dieses Medium strömungsverlustarm im Inneren zu führen, ist vorgesehen, dass ein Paar (25) von aneinander liegenden Rotorscheiben (34, 42) vorgesehen, wovon die erste der beiden Rotorscheiben (34) des Paares (25) Bohrungen 36 aufweist, um das Medium von außen in das Rotorinnere einzuspeisen, und rippenförmige Rippen 40, um das Medium weiter in Richtung Rotationsachse (13) zu führen und wobei die zweiten Rotorscheibe (34, 42) des Paares (25) mit Hilfe eines Hilfsstegs (46) so ausgestaltet ist, dass die in Umfangsrichtung betrachtet zwischen den Rippen (40) ausgeformten Strömungspassagen zumindest über den Großteil der radialen Erstreckung der Rippen (40) axial begrenzt ist.

## Beschreibung

Die Erfindung betrifft einen Rotor für eine thermische Strömungsmaschine, welcher im Inneren zur Führung eines Mediums ausgebildet ist.

Rotoren für thermische Strömungsmaschinen wie Axialverdichter und Gasturbinen sind aus dem umfangreich vorhandenen Stand der Technik in unterschiedlichen Bauformen bekannt. Beispielsweise sind für Gasturbinen geschweißte Rotoren bekannt, bei denen unterschiedlich breite Trommeln miteinander zu einem monolithischen Rotor verschweißt sind. Andererseits ist es bekannt, mehrere scheibenförmige Elemente - bekannt auch als Rotorscheiben - zu stapeln und diese mit Hilfe einer oder mehrerer Zuganker zu einem festen Gebilde zu verspannen. Selbst Kombinationen dieser Bauformen sind bekannt. An allen Rotoren sind außen Laufschaufel montiert, die bei Gasturbinen beispielsweise entweder dem Verdichter oder der Turbineneinheit zuzuordnen sind. Unabhängig von der Bauform kann über im Rotormantel angeordnete Löcher ein Medium in das Innere der Rotoren eingeleitet werden, um dieses Medium von der Einspeise-Position zu einer zweiten axialen Position zu führen, wo das Medium dem Rotor wieder entnommen wird. Diese Methode wird insbesondere bei Gasturbinen eingesetzt, um Kühlluft dem Hauptströmungspfad des Verdichters einer Gasturbine rotorseitig zu entnehmen und zur Turbineneinheit zu führen, wo sie dann wieder aus dem Rotorinneren herausgeführt zu Kühlluftzwecken und/oder Sperrluftzwecken verwendet werden kann.

Um eine aerodynamisch effiziente Entnahme von Luft aus dem Verdichter einer Gasturbine und eine effiziente Führung der Luft im Rotorinneren zu ermöglichen, sind unterschiedliche Konstruktionen bekannt.

Beispielsweise ist es aus der DE 196 17 539 A1 bekannt, die wegen der Drehung des Rotors mit Drall in den Rotorhohlraum einströmende Luft über sich radial erstreckende Rippen zur Rotormitte zu führen. Die Führung bewirkt, dass die Umfangsgeschwindigkeit der aus den Bohrungen austretenden Luft sich mit kleiner werdendem Radius verringert, was eine unzulässig große Drallbildung verhindert. Aus diesem Grunde werden die Rippen als "Deswirler" bezeichnet, was aus dem Englischen abgeleitet ist.

Aufgabe der vorliegenden Erfindung ist die Bereitstellung einer alternativen Lösung, bei der die Druck- und Strömungsverluste im Rotorinneren weiter reduziert sind.

Die auf die Erfindung gerichtete Aufgabe wird mit einem Rotor gemäß den Merkmalen des Anspruchs 8 gelöst. Der erfindungsgemäße Rotor umfasst zumindest eine Rotorscheibe gemäß Anspruch 1 und eine Rotorscheibe gemäß Anspruch 5 als ein Scheibenpaar.

Vorteilhafte Ausgestaltungen sind in den abhängigen Ansprüchen angegeben, deren Merkmale gemäß den Rückverweisen miteinander kombiniert werden können.

Die Erfinder haben erkannt, das im Stand der Technik Strömungsverluste im Bereich der radialen Rippen auftreten können, da diese in Umfangsrichtung eher vergleichsweise weit auseinander stehen und somit an dieser Stelle große Strömungsquerschnitte für das der Strömungsmaschine entnommene Medium vorhanden sind. Dies gilt umso mehr, da die Strömungspassagen zwischen den bekannten Rippen auch eine vergleichsweise große axiale Ausdehnung aufweisen. Um diesen Nachteil auszuräumen, wird mit der Erfindung erstmalig vorgeschlagen, den Strömungsquerschnitt der Strömungspassagen zwischen den Rippen auch axial zu begrenzen. Die axiale Begrenzung soll sich vorzugsweise zumindest über einen Großteil der radialen Ausdehnung der Rippen ausbilden. Aus diesem Grunde weist diejenige Rotorscheibe, die den Rippen unmittelbar gegenüberliegt, an ihrem - gegenüber der Breite des Scheibenstegs verbreiterten - Nabenbereich einen nach außen weisenden frei endenden ringförmigen Hilfssteg aus, welcher die zwischen den Rippen ausgeformten Strömungspassagen für das durch die Bohrungen strömende Medium über die gesamte radiale Ausdehnung der Rippen axial begrenzt. Dies verringert aerodynamische Strömungsverluste bei der Einspeisung des in das Rotorinnere einströmenden Mediums im Bereich der Rippen und führt zu einer aerodynamisch verbesserten Führung des entnommenen Mediums entlang der Rippen, von außen nach innen.

Es sei bemerkt, dass sich die Begriffe "axial" und "radial" sowie "außen" und "innen" stets auf die Rotationsachse der Rotorscheibe bzw. des Rotors beziehen. Unter dem Rotorinneren ist zudem derjenige Hohlraum im Inneren des Rotors verstanden, den von den Rotorscheiben begrenzt ist. Mit anderen Worten: Die Bohrungen der ersten Rotorscheibe zählen nicht zum Rotorinneren.

Bei aus Scheiben zusammengesetzten Rotoren - unabhängig davon, ob die Scheiben später miteinander verschweißt werden oder über einen oder mehrere Zuganker miteinander verspannt werden - umfasst eine der beiden Rotorscheiben, nachfolgend als erste Rotorscheibe bezeichnet, die Bohrungen, um das Medium von außen ins Rotorinnere zu überführen, und eine Vielzahl von Rippen zur Strömungsweiterleitung des durch die Bohrungen strömbaren Mediums. Die Bohrungen münden rotorinnenseitig in einer schräg zur Radialrichtung angeordneten Ringfläche des Rotors. Dazu radial innen unmittelbar benachbart enden die Rippen.

Die andere der beiden Rotorscheiben für den erfindungsgemäßen Rotor, nachfolgend als zweite Rotorscheibe bezeichnet, umfasst einen endlos umlaufenden Scheibensteg, der an seinem - bezogen auf die Rotationsachse - radial inneren Ende einen Nabenbereich mit einer zur Rotationsachse konzentrischen zentralen Öffnung und an seinem radial äußeren Ende einen axial verbreiterten Kranzbereich zur Anlage an benachbarte Scheiben und zur Aufnahme von Laufschaufeln aufweist, wobei der Nabenbereich gegenüber eine Dicke des Scheibenstegs in Axialrichtung beidseitig verbreitert ist, so dass an zumindest einem der so gebildeten Überstände ein nach außen weisender frei endender ringförmiger Hilfssteg unter Bildung einer ringförmigen Ausnehmung zwischen dem Scheibensteg und dem Hilfssteg vorgesehen ist.

Die in Radialrichtung erfassbare Ausdehnung der Rippen und die des Hilfsstegs einschließlich des Überstands sind dabei so aufeinander abgestimmt, dass sie in etwa gleich groß sind, d.h. vorzugsweise enden die Rippen und der Hilfssteg bzw. der Überstand außen wie innen auf dem gleichen Radius.

Bei der ersten Rotorscheibe können sich die Rippen entlang der Radialrichtung von innen nach außen erstrecken. Dies führt zu einer besonders wirksamen Entdrallung des von außen einströmenden Mediums, was die Strömungsverluste reduziert.

Weiter bevorzugt weist zumindest eines der Rippen, vorzugsweise alle Rippen, an ihren radial nach außen weisenden Enden eine frei endende Verlängerung auf, wodurch der Abstand zwischen der rotorinnenseitigen Bohrungsmündung und dem radial äußeren Ende der jeweiligen Rippe weiter reduziert werden kann. Die Reduzierung dieser Abstände führt zu einer verbesserten Führung des aus den Bohrungen austretenden Mediums, was die Strömungsverluste weiter mindert.

Vorzugsweise umfassen beide Rotorscheiben im Kranzbereich an beiden Scheibenseiten einen quer abstehenden Kragen mit einer in Axialrichtung der Rotationsachse erfassbaren Kragenhöhe, dessen Kragenhöhe geringfügig größer ist als die analog erfassbare Höhe des betreffenden Überstands bzw. der Rippen. Mit Hilfe der geringfügig größeren Kragen weisen die Rotorscheiben an ihren radial äußeren Bereichen eine größere axiale Breite auf als radial innen, wodurch verhindert wird, dass wenn beide Rotorscheiben aneinander liegen, der Hilfssteg mit den Rippen in Kontakt gelangt. Letzteres könnte zu mechanischen Verschleiß führen, welcher so aber vermieden werden kann. Vorzugsweise sind die Höhen und die axialen Breiten der Rotorscheiben im Kranzbereich so gewählt, dass die axialen Abstände zwischen den Rippen und der gegenüberliegenden seitlichen Fläche des Hilfssteges so klein wie möglich gehalten sind unter Berücksichtigung der thermischen Dehnungen, die beim Betrieb auftreten.

Weiter bevorzugt sind die sich durch den Scheibensteg erstreckenden Bohrungen derartig geneigt, dass im Kranzbereich die Bohrungen an einer stromabwärtigen Seite der ersten Rotorscheibe - bezogen auf die Durchströmungsrichtung des Mediums im Hauptströmungspfad der Strömungsmaschine - münden. Damit liegt die Entnahmeposition für das zu extrahierende Medium stromab der von der betreffenden Rotorscheibe getragenen Laufschaufeln. Mit anderen Worten: die Bohrungen sind - bezogen auf ihr inneres Ende - stromabwärts geneigt.

Die geneigten Bohrungen unterstützen die gleichmäßige Aufheizung der Rotorscheibe, was thermischen Spannungen in der Rotorscheibe reduziert. Gleichzeitig findet die Entnahme eines Mediums aus dem Hauptstrom der Strömungsmaschine an einer axialen Position statt, in der die Umfangsgeschwindigkeit des Mediums im Hauptströmungspfad der Strömungsmaschine im Wesentlichen der Umfangsgeschwindigkeit des Rotors entspricht. Dies erleichtert das Einströmen des Mediums in die Bohrungen, was aerodynamische Verluste reduziert. Mithin werden so positive Einströmbedingungen für das dem Hauptstrom zu entnehmende Medium geschaffen.

Beide Rotorscheiben können vorzugsweise als Verdichterscheibe oder als Turbinenscheibe ausgestaltet sein. Bei Verdichterscheiben münden die Bohrungen vorzugsweise außen im Kragen und bei Turbinenscheiben münden die Bohrungen außen in den Befestigungsnuten der Laufschaufeln.

Insgesamt betrifft die Erfindung einen Rotor für eine thermische Strömungsmaschine, insbesondere eine Gasturbine, der ausgestaltet ist, in seinem Inneren ein Medium, beispielsweise Verdichterluft, zu führen. Um dieses Medium strömungsverlustarm im Inneren zu führen, ist vorgesehen, dass ein Paar von aneinander liegenden Rotorscheiben vorgesehen, wovon die erste der beiden Rotorscheiben des Paares Bohrungen aufweist, um das Medium von außen in das Rotorinnere einzuspeisen, und rippenförmige Rippen, um das Medium weiter in Richtung Rotationsachse zu führen und wobei die zweiten Rotorscheibe des Paares mit Hilfe eines Hilfsstegs so ausgestaltet ist, dass die in Umfangsrichtung betrachtet zwischen den Rippen ausgeformten Strömungspassagen zumindest über den Großteil der radialen Ausdehnung der Rippen axial begrenzt ist.

Weitere Vorteile und Merkmale der Erfindung werden anhand eines einzigen Ausführungsbeispieles erläutert.

Es zeigen:
- Figur 1: einen Längsschnitt durch einen Läufer einer Strömungsmaschine und
- Figur 2: einen Ausschnitt durch den Längsschnitt eines erfindungsgemäßen Rotors einer Strömungsmaschine mit im Wesentlichen zwei Rotorscheiben.

In beiden Figuren sind identische Merkmale mit den gleichen Bezugszeichen versehen.

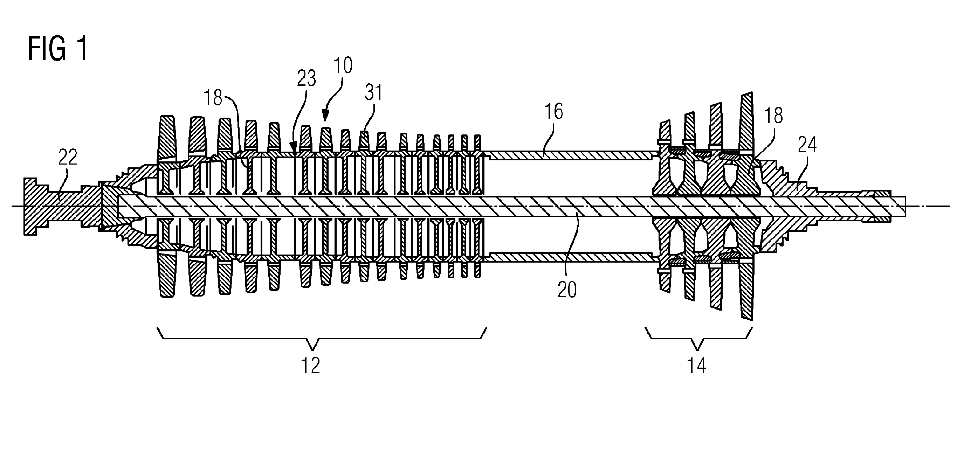

Figur 1 zeigt den prinzipiellen schematischen Aufbau eines Rotors 10 einer thermischen Strömungsmaschine, die im montierten zustand um ihre Rotationsachse 13 drehbar gelagert ist. Im gezeigten Ausführungsbeispiel handelt es sich um den Rotor 10 einer stationären Gasturbine. Der Rotor 10 könnte auch in einer Flugzeug-Gasturbine Verwendung finden. Aufgrund des Einsatzes in einer Gasturbine umfasst der Rotor 10 einen Verdichterabschnitt 12 und einen Turbinenabschnitt 14. Zwischen den beiden Abschnitten 12, 14 ist ein Rohr 16 vorgesehen. Sowohl der Verdichterabschnitt 12 als auch der Turbinenabschnitt 14 sind in Scheibenbauart ausgeführt. Der Verdichterabschnitt 12 umfasst im gezeigten Ausführungsbeispiel sechzehn Rotorscheiben 18 und der Turbinenabschnitt 14 vier Rotorscheiben 18. Durch alle Rotorscheiben 18 und das Rohr 16 erstreckt sich ein Zuganker 20, an dessen beiden Enden eine sogenannte vordere Hohlwelle 22 und eine sogenannte hintere Hohlwelle 24 aufgeschraubt sind. Die beiden Hohlwellen 22, 24 verspannen sämtliche Rotorscheiben 18 und das Rohr 16 miteinander, so dass Relativbewegungen in Umfangsrichtung weitestgehend vermieden werden. Im Detail wird dieses durch an den Kontaktflächen 23 angeordnete Hirth-Verzahnungen. Diese sind jedoch nicht weiter dargestellt.

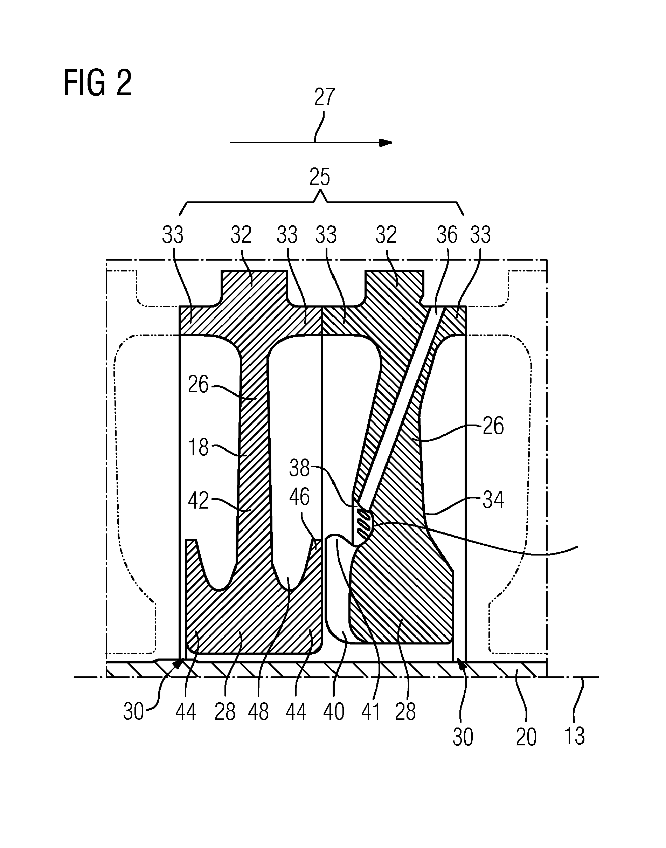

Die erfindungsgemäßen Merkmale sind in Figur 1 nicht dargestellt. Hierzu wird auf Figur 2 verwiesen, die einen Ausschnitt von zwei beliebigen, jedoch ein Scheibenpaar 25 bildende Rotorscheiben 18 des Verdichterabschnitts 12 aus Figur 1 vergrößert darstellen.

Außerhalb des Rotors 10 strömt im Betriebszustand in einem nicht weiter dargestellten Hauptströmungspfad als Medium Luft in Pfeilrichtung 27, die vom Verdichter währenddessen komprimiert wird.

Jede Rotorscheibe 18 weist einen sich um die Rotationsachse 13 endlos umlaufenden Scheibensteg 26 auf. Der Scheibensteg 26 weist an seinem radial inneren Ende einen Nabenbereich 28 mit einer zur Rotationsachse konzentrischen zentralen Öffnung 30 und an seinem radial äußeren Ende einen Kranzbereich 32 auf. Der Kranzbereich dient zur Befestigung von Laufschaufeln 31 (Figur 1) und umfasst beidseitig angeordnete Kragen 33, an denen die benachbarten Rotorscheiben 18 aneinander liegen. Die in Figur 2 rechts der Mitte dargestellte Rotorscheibe 18 wird nachfolgend als erste Rotorscheibe 34 bezeichnet. Die erste Rotorscheibe 34 weist zudem sich durch den Scheibensteg 26 vom Kranzbereich nach innen erstreckende Bohrungen auf, die entlang des Umfangs des Scheibenstegs 26 gleichmäßig verteilt sind. Von den Bohrungen ist lediglich eine dargestellt und mit dem Bezugszeichen 36 beschriftet. Die Bohrungen 36 sind derartig gegenüber der Radialrichtung geneigt, dass sie den Scheibensteg 26 von der einen Seite zu der anderen Seite durchdringen. Die Bohrungen 36 münden mit ihrem radial inneren Ende in einer Ringfläche 38, welche Ringfläche 38 schräg zur Radialrichtung der Rotorscheibe 34 angeordnet ist. Unmittelbar benachbart zur Ringfläche 38 ist im Nabenbereich 28 eine Vielzahl von Rippen 40 vorgesehen. Die Rippen 40 erstrecken sich von einem äußeren zu einem inneren Ende. Zudem sind die Rippen 40 gleichmäßig entlang des Umfangs verteilt. Die Rippen 40 können an den Nabenbereich 28 der ersten Rotorscheibe 34 angeschweißt sein oder gleichzeitig mit dieser hergestellt worden sein. Im Bezug auf den befestigten Abschnitt der Rippe 40 wiest jede am äußeren Ende der Rippe 40 eine Verlängerung auf, um den Abstand zu 41 der Ringfläche 38 und den Mündungen der Bohrungen 36 möglichst klein zu halten. Strukturmechanisch gilt es zu vermeiden, dass die Rippen 40 auch in einer umlaufenden Hohlkehle 50 befestigt sind, jedoch strukturmechanisch zwischen der Ringfläche 38 und dem Nabenbereich 28 ebenso erforderlich ist.

Die Rippen 40 dienen zur Strömungsführung der aus den Bohrungen 36 strömenden Luft, die in das Innere des Rotors 10 einströmen sollen. An derjenigen Seite der ersten Rotorscheibe 34, an der die Rippen 40 vorgesehen sind, grenzt eine zweite Rotorscheibe 42 an. Wie jede gewöhnliche Rotorscheibe 18 weist auch die zweite Rotorscheibe 42 einen Nabenbereich 28 auf, dessen axiale Ausdehnung aufgrund zweier Überstände 44 breiter ist als die des zugehörigen Scheibenstegs 26. Aus symmetriegründen sind an beiden Überständen 44 ein nach außen weisender frei endender ringförmiger Hilfssteg 46 unter Bildung einer ringförmigen Ausnehmung 48 zwischen dem Scheibensteg 26 und dem Hilfssteg 46 vorgesehen, gleichwohl nur derjenige Hilfssteg 46 erforderlich wäre, welcher den Rippen 40 unmittelbar gegenüberliegt. Der Hilfssteg 46 in Verbindung mit dem Überstand 44 begrenzt über die gesamte radiale Ausdehnung der Rippen 40 die Strömungspassagen, in der die aus den Bohrungen 36 austretende Kühlluft eintritt und bis zum Zuganker 20 geführt wird. Dies vermeidet Verwirbelungen der Luft am Eintritt jeder Strömungspassage, was die Effizient der Luftführung verbessert.

Da die zentralen Öffnungen 30 der Rotorscheiben 18 größer sind als der Durchmesser des Zugankers 20, bilden sich Ringräume zwischen den jeweiligen Nabenbereichen 28 und dem Zuganker 20 aus, durch die die zum Zuganker 20 geführte Luft in axialer Richtung entlang des Zugankers 20 vom Verdichterabschnitt 12 zum Turbinenabschnitt 14 geführt werden kann.

Selbstverständlich kann das voran beschriebene Scheibenpaar 25 auch genutzt werden, um die entlang des Zugankers 20 geführte Luft nach außen zu führen, wie es bei Rotorscheiben 18 im Turbinenabschnitt 14 erforderlich ist.

## Patentansprüche

1. Rotorscheibe (34) für einen Rotor (10) einer Strömungsmaschine,
mit einem um eine Rotationsachse (13) der Rotorscheibe (34) endlos umlaufenden Scheibensteg (26), der an seinem -bezogen auf die Rotationsachse (13) - radial inneren Ende einen Nabenbereich (28) mit einer zentralen Öffnung (30) und an seinem radial äußeren Ende einen Kranzbereich (32) zur Aufnahme von Laufschaufeln (31) aufweist, von welchem Kranzbereich (32) aus sich entlang des Umfangs verteilte nach innen den Scheibensteg (26) durchdringende Bohrungen (36) angeordnet sind, die in einer schräg zur Radialrichtung angeordneten Ringfläche (38) der Rotorscheibe (34) münden,
**dadurch gekennzeichnet, dass**
radial innen benachbart zur Ringfläche (38) der Nabenbereich (28) eine Vielzahl von Rippen (40) zur Strömungsweiterleitung von durch die Bohrungen (36) strömbarer Luft aufweist.

2. Rotorscheibe (34) nach Anspruch 1,
bei der jedes Leitelement (40) von innen nach außen sich entlang der Radialrichtung erstreckt.

3. Rotorscheibe (34) nach Anspruch 1 oder 2,
bei der zumindest eines der Rippen (40), vorzugsweise alle Rippen (40), an ihren radial nach außen weisenden Enden eine frei endende Verlängerung (41) aufweisen.

4. Rotorscheiben (34) nach einem der vorangehenden Ansprüche,
welche als Verdichterscheibe (18) oder als Turbinenscheibe (18) ausgestaltet ist.

5. Rotorscheibe (42) für einen Rotor (10) einer Strömungsmaschine,
mit einem um eine Rotationsachse (13) der Rotorscheibe (42) endlos umlaufenden Scheibensteg (26), der an seinem - bezogen auf die Rotationsachse (13) - radial inneren Ende einen Nabenbereich (28) mit einer zentralen Öffnung (30) und an seinem radial äußeren Ende einen Kranzbereich (32) zur Aufnahme von Laufschaufeln (31) aufweist, wobei der Nabenbereich (28) in Axialrichtung beidseitig einen Überstand (44) aufweist,
**dadurch gekennzeichnet, dass**
zumindest einer der beiden Überstände (44) einen nach außen weisenden frei enden ringförmigen Hilfssteg (46) unter Bildung einer ringförmigen Ausnehmung (48) umfasst.

6. Rotorscheibe (42) nach Anspruch 5,
bei der im Kranzbereich (32) an beiden Scheibenseiten ein quer abstehender Kragen (33) angeordnet ist, dessen Kragenhöhe geringfügig größer ist als die Höhe des betreffenden Überstands (44).

7. Rotorscheiben (42) nach Anspruch 4 oder 5,
welche als Verdichterscheibe (18) oder als Turbinenscheibe (18) ausgestaltet ist.

8. Rotor (10) für eine Strömungsmaschine,
mit zumindest einem Paar (25) von einander liegenden Rotorscheiben (18),
wobei die erste der beiden Rotorscheiben (34) des Paares (25) nach einem der Ansprüche 1, 2, 3 oder 4 und die zweite der beiden Rotorscheiben (42) des Paares (25) nach einem der Ansprüche 4, 5 oder 6 ausgestaltet ist, wobei die Anordnung der ersten und der zweite Rotorscheibe (34, 42) des Paares (25) so gewählt ist, dass Rippen (40) und Hilfssteg (46) einander gegenüberliegen.

9. Rotor (10) nach Anspruch 8,
bei dem die in Radialrichtung erfassbare Ausdehnung der Rippen (40) und die des Hilfsstegs (46) und des Überstands (44) so aufeinander abgestimmt sind, dass die Rippen (40) und der Hilfssteg (6) bzw. der Überstand (44) außen wie innen auf dem gleichen Radius enden.
